# FASCICULE DE BREVET EUROPEEN

(11) **EP 1 367 281 B1**
(45) Date de publication et mention de la délivrance du brevet: **15.11.2006**
(21) Numéro de dépôt: 03291171.1
(22) Date de dépôt: 20.05.2003
(51) Int. Cl.: F16D 23/14

(54) **Butée de débrayage avec élément d'attaque rapporté**
Kupplungsausrücklager mit Einsatz für ein Angriffselement
Clutch release bearing with insert for attack element

(30) Priorité: 28.05.2002 FR 0206516
(43) Date de publication de la demande: 03.12.2003
(73) Titulaire: Aktiebolaget SKF, 415 50 Göteborg (SE)
(72) Inventeur: Wilson, Pamphile, 91310 Linas (FR); Arnault, Benoît, 37540 St-Cyr-sur-Loire (FR); Verger, Frédéric, 92220 Bagneux (FR)
(74) Mandataire: Casalonga, Axel

(56) Documents cités:
- EP-A- 0 892 188
- FR-A- 2 215 112
- US-A- 4 629 049

## Description

La présente invention concerne le domaine des butées de débrayage destinées à agir sur le diaphragme d'un embrayage, en particulier pour un véhicule automobile.

L'invention s'applique aux butées de débrayage comprenant un roulement dont une des bagues est tournante et l'autre bague est fixe.

Entre la bague tournante et la bague fixe sont disposées des billes régulièrement réparties dans le sens circonférentiel au moyen d'une cage, la bague tournante étant munie d'une surface d'attaque sensiblement radiale destinée à venir en contact avec l'extrémité des doigts composant le diaphragme de l'embrayage. Un élément de manoeuvre supporte le roulement et, sous l'action d'un organe de commande (mécanique, électrique ou hydraulique), vient déplacer axialement le roulement de butée contre le diaphragme de l'embrayage. Un élément d'autocentrage est généralement interposé entre la bague fixe du roulement et l'élément de manoeuvre, ledit élément d'autocentrage assurant la liaison entre ces deux pièces tout en autorisant, par son élasticité, un déplacement radial relatif entre lesdites deux pièces.

Le roulement vient ainsi actionner l'embrayage par l'intermédiaire de sa bague tournante suivant un diamètre d'action défini par la zone de contact entre diaphragme et bague tournante du roulement de butée, que celle-ci soit massive ou en tôle. Les extrémités des doigts de diaphragme en contact avec la bague tournante de la butée peuvent avoir une forme plane ou bien arrondie et la surface de contact correspondante de la bague tournante peut également être de forme arrondie ou plane. Le roulement de butée peut s'auto-centrer en fonctionnement sur le diaphragme grâce à l'élément d'autocentrage et à un jeu radial existant entre l'organe de manoeuvre et la bague fixe du roulement de butée.

La surface d'attaque d'une butée donnée possède donc un diamètre d'action utile qui lui est spécifique et n'est généralement pas apte à fonctionner avec des embrayages différents les uns des autres, soit de par leur diamètre d'action, soit de par la forme des extrémités de doigts de diaphragme. I1 faut donc des bagues tournantes de butée adaptées à chaque série de diamètres d'action d'embrayage et également à la forme des extrémités des doigts de diaphragme. Ceci conduit à une multiplication des variantes de fabrication des butées de débrayage et à une augmentation des coûts de fabrication, de gestion et de stockage.

On connaît par le brevet français n° 73 02 385, une butée de débrayage dans laquelle une collerette d'attaque rapportée est emmanchée avec serrage sur une portée cylindrique de la bague intérieure tournante, permettant d'utiliser un même type de roulement de base pour différentes dimensions de diaphragme. Ce système est satisfaisant avec un roulement conventionnel à bague massive possédant des surfaces cylindriques pouvant fournir une portée suffisante pour l'emmanchement de la collerette d'attaque rapportée. Par contre, il ne peut être appliqué de façon fiable à un roulement de butée à bague en tôle du fait de la relative complexité des formes de bague par rapport à un roulement conventionnel et de l'absence de portée satisfaisante pour l'emmanchement de la collerette d'attaque rapportée. Il est très difficile à utiliser avec un roulement à bague massive standard dont les bagues sont de longueur axiale identique et les surfaces frontales radiales coplanaires. Notons enfin que l'emmanchement serré d'une collerette d'attaque rapportée sur une bague de roulement risque de modifier le jeu interne dudit roulement, ce qui peut avoir des conséquences néfastes.

Le document EP-A-0 892 188 propose une butée de débrayage avec surface d' attaque rapportée comprenant une collerette d' attaque solidaire de la bague tournante et prévue pour entrer en contact avec le diaphragme et un organe de liaison axialement élastique pourvu de fenêtres coopérant avec des excroissances de la collerette d'attaque formant des crochets. La collerette d'attaque se centre sur la bague tournante du roulement. L'organe de liaison comprend une embase circulaire en forme de rondelle qui vient en appui sur la bague tournante axialement à l'opposé de la collerette d'attaque. Un tel système donne satisfaction pour les roulements de butée à bague en tôle, mais est relativement complexe.

La présente invention vise à remédier aux inconvénients des dispositifs décrits ci-dessus en proposant une butée simple, économique, comportant peu de pièces et pouvant incorporer un roulement à bagues en tôle aussi bien qu'un roulement standard à bagues massives.

Le dispositif de butée de débrayage, selon l'invention, est du type comprenant un palier à roulement muni d'une bague non tournante et d'une bague tournante, et capable d'agir sur un diaphragme de mécanisme d'embrayage.

Le dispositif de butée de débrayage comprend un élément d'attaque en tôle solidaire de la bague tournante et prévu pour entrer en contact avec le diaphragme. Le dispositif comprend des moyens de retenue de l'élément d'attaque sur la bague tournante. Lesdits moyens de retenue sont monoblocs avec l'élément d'attaque. On bénéficie ainsi d'un élément d'attaque assurant lui-même son maintien sur la bague tournante du roulement de butée. La butée de débrayage est donc de structure simple et économique et de montage aisé.

Dans un mode de réalisation de l'invention, les moyens de retenue sont élastiques.

Avantageusement, les moyens de retenue comprennent des languettes axiales pourvues à leur extrémité de moyens de retenue axiale sur la bague tournante du roulement.

Dans un mode de réalisation de l'invention, les moyens de retenue axiale comprennent des pattes pliées radialement, notamment vers l'intérieur. Les pattes peuvent être obtenues par découpe partielle des languettes axiales et pliage.

Dans un mode de réalisation de l'invention, l'élément comprend des languettes de centrage sur la bague tournante du roulement de butée.

La bague extérieure du roulement peut être réalisée en tôle emboutie sans enlèvement de copeaux, ou encore être de type massif réalisé par usinage. La bague non tournante sera généralement du même type que la bague tournante.

L'invention propose encore un élément d'attaque pour butée de débrayage comprenant un palier à roulement muni d'une bague non tournante et d'une bague tournante, ledit élément en tôle étant prévu pour être solidaire de la bague tournante et pour entrer en contact avec un diaphragme d'embrayage. L'élément comprend de façon monobloc des moyens de retenue aptes à coopérer avec la bague tournante du roulement de butée.

On dispose ainsi d'un roulement de butée de faible poids, de fabrication standardisée et pourvu d'un élément d'attaque permettant l'adaptation d'un même roulement à des types différents de diaphragme d'embrayage.

L'invention sera mieux comprise et d'autres avantages apparaîtront à la lecture de la description détaillée de quelques modes de réalisation pris à titre d'exemples nullement limitatifs et illustrés par les dessins annexés, sur lesquels :
- la figure 1 est une vue de côté, partiellement en coupe axiale et partiellement en élévation, d'une butée d'embrayage selon un aspect de l'invention ;
- la figure 2 est une vue de détail d'une patte de collerette de la figure 1 ;
- la figure 3 est une vue arrière en élévation de la butée de débrayage de la figure 1 ; et
- la figure 4 est une vue en coupe axiale d'un autre mode de réalisation de butée de débrayage selon l'invention.

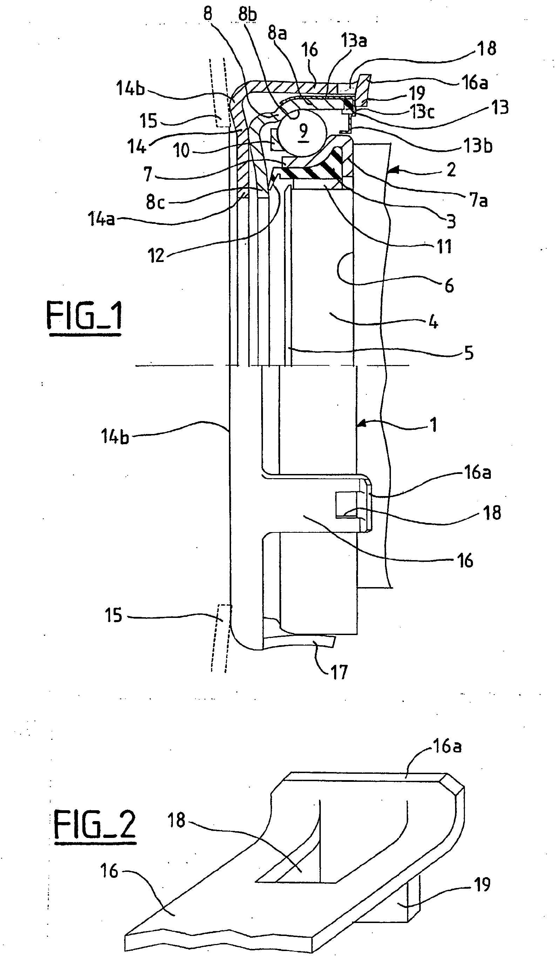

Comme on peut le voir sur les figures 1 à 3, la butée de débrayage comprend un palier à roulement 1 monté sur un élément de manoeuvre 2 au moyen d'un organe d'auto-centrage 3. L'élément de manoeuvre 2 comprend une partie tubulaire 4 pourvue à son extrémité libre d'un rebord 5 annulaire en saillie vers l'extérieur et d'une surface radiale 6 formée à l'autre extrémité de la partie tubulaire 4.

Le roulement 1 est monté en contact avec la surface radiale 6 de l'élément de manoeuvre 2. Le roulement 1 comprend une bague intérieure non tournante 7, une bague extérieure tournante 8 réalisée en tôle emboutie, une rangée d'éléments roulants 9 maintenue par une cage 10 et disposée entre les bagues intérieure 7 et extérieure 8. La bague intérieure 7 est pourvue d'une portion radiale 7a qui vient en contact avec la surface radiale 6 de l'élément de manoeuvre 2.

L'organe d'auto-centrage 3 est disposé dans l'alésage de la bague intérieure 7 et comprend une pluralité de dents 11 flexibles radialement et s'étendant en direction de la partie tubulaire 5 de l'élément de manoeuvre 2. Le roulement 1 peut donc s'auto-centrer par rapport à l'élément de manoeuvre 2 en provoquant le fléchissement des dents 11 de l'organe d'auto-centrage 3. Une lèvre d'étanchéité 12, issue de l'organe d'auto-centrage 3, s'étend axialement vers l'extérieur et vient frotter contre la bague extérieure tournante 8. Un organe d'étanchéité 13 est également prévu à l'autre extrémité du roulement 1.

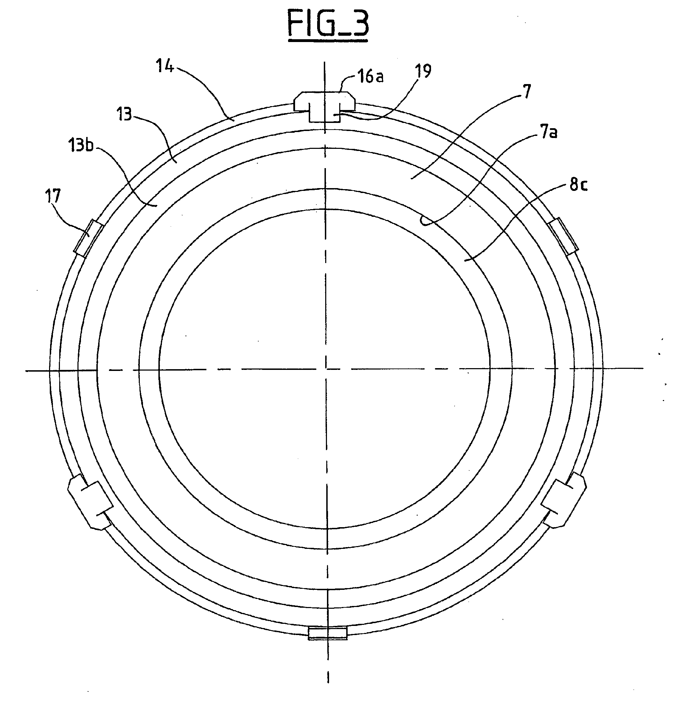

Pour des raisons de clarté du dessin, l'organe d'auto-centrage 3 a été omis sur la figure 3.

La bague extérieure tournante 8 comprend une portion tubulaire 8a adjacente à la piste de roulement 8b prévue pour la rangée d'éléments roulants 9, et en contact avec l'organe d'étanchéité 13. Du côté axialement opposé à l'élément de manoeuvre 2, la bague extérieure 8 comprend une portion sensiblement radiale 8c s'étendant vers l'intérieur. La portion radiale 8c est recouverte par un élément d'attaque 14, réalisé en tôle emboutie, et comprenant une portion sensiblement radiale 14a s'appliquant au moins en partie contre la portion radiale 8c de la bague extérieure 8, un bourrelet circulaire toroïdal 14b en saillie axialement vers l'extérieur disposé à l'extrémité de grand diamètre de la portion radiale 14a, et formant une surface de contact avec les doigts 15 d'un diaphragme d'embrayage.

L'organe d'étanchéité 13 comprend un élément en tôle fine et un élément souple en forme de rondelle 13c disposé entre l'élément en tôle et l'extrémité libre de la portion tubulaire 8a de la bague 8. L'élément en tôle comprend une portion de fixation 13a entourant la surface extérieure de la portion tubulaire 8a de la bague tournante 8 avec concordance de forme. La portion de fixation 13a présente une forme généralement axiale. L'élément en tôle comprend également une portion d'étanchéité 13b venant former un passage étroit avec la bague non tournante 7. La portion d'étanchéité 13b présente une forme généralement radiale et s'étend à partir de l'extrémité de la portion de fixation 13a adjacente à l'extrémité libre de la portion tubulaire 8a, vers la bague non tournante 7. L'étanchéité entre la portion tubulaire 8a et l'élément en tôle est assurée par l'élément souple 13c.

Les doigts 15 sont de forme plate et le bourrelet 14b est de forme arrondie en coupe axiale pour une bonne coopération entre ces deux éléments. L'élément d'attaque 14 se prolonge au-delà du bourrelet 14b par trois excroissances radiales formant des languettes 16 orientées axialement à l'opposé des doigts 15 du diaphragme, et par trois autres excroissances radiales formant des languettes 17 également orientées axialement à l'opposé des doigts 15 du diaphragme. Les languettes 16 et les languettes 17 sont circonférentiellement régulièrement réparties, les languettes 16 alternant avec les languettes 17. Les languettes 16 sont de longueur axiale supérieure à celle du roulement 1 et font saillie axialement au-delà de la surface radiale 6 de l'élément d'attaque 2.

Une patte rectangulaire 19 est formée par découpe partielle et pliage vers l'intérieur de l'extrémité libre 16a de chaque languette 16. Après découpe et pliage de la patte 19, il subsiste sur la languette 16 une fenêtre 18 délimitée sur trois côtés par les bords de découpe formant un « U » et sur le quatrième côté par la face interne de la patte 19. La largeur de la fenêtre 18 est comprise entre 1/3 et 2/3 de la largeur de la languette 16. L'extrémité libre 16a est pliée vers l'extérieur selon un angle de l'ordre de 70 à 90° par rapport à l'axe général de la languette 16. La patte 19 est donc dirigée radialement vers l'intérieur et vient en appui contre l'organe d'étanchéité 13 solidaire de la portion tubulaire 8a de la bague extérieure 8. Les languettes 16, munies de leurs pattes 19, assurent ainsi la retenue axiale de l'élément d'attaque prévu pour être en contact avec un diaphragme d'embrayage, avec le roulement 1.

Les languettes 17 sont de longueur axiale inférieure à celle du roulement 1 et viennent en contact avec la surface extérieure du roulement 1 formée par une portion de l'organe d'étanchéité 13 enveloppant la portion tubulaire 8a de la bague extérieure 8.

Les languettes de centrage 17 sont inclinées radialement vers la bague extérieure 8 et sont montées sur celle-ci avec une très légère interférence diamétrale afin de rester en permanence en contact avec la surface extérieure de ladite bague 8, ici formée par la surface extérieure de l'organe d'étanchéité 13, et assurer ainsi un centrage précis. Au contraire, les languettes de retenue 16 sont prévues avec un léger décalage radial par rapport à ladite bague extérieure 8. Toutefois, on pourrait prévoir que les languettes de retenue 16 puissent également entrer en contact avec ladite bague extérieure 8. Les pattes de retenue 19 sont sorties de la tôle des languettes de retenue 16 par poinçonnage, et sont rabattues radialement.

Bien entendu, on pourrait, sans sortir du cadre de l'invention, former les pattes de retenue 19 par d'autres procédés, par exemple par pliage de l'extrémité libre des languettes 16.

Pour monter l'élément d'attaque 14 sur le roulement de butée, on vient coiffer la bague extérieure 8 munie de son élément d'étanchéité 13 avec ledit élément d'attaque 14 en introduisant l'extrémité des languettes 16 sur la bague extérieure 8 et en poussant axialement sur la collerette d'attaque rapportée.

Les languettes de retenue 16 fléchissent radialement vers l'extérieur lors du passage desdites languettes sur la bague extérieure 8, puis une fois que les pattes de retenue 19 sont passées derrière la face arrière de l'organe d'étanchéité 13, lesdites languettes de retenue 16 viennent par élasticité se refermer radialement vers la bague extérieure 8 et permettre ainsi aux pattes de retenue 19 de venir coopérer avec la face arrière de l'organe d'étanchéité 13 et assurer leur fonction de retenue axiale.

Bien entendu, si dans une variante on choisit de ne pas monter l'organe d'étanchéité 13 sur la bague extérieure 8, les pattes de retenue 19 viendront alors en contact avec l'extrémité libre de la portion tubulaire 8a de la bague extérieure 8.

Simultanément, les languettes de centrage 17 viennent radialement en appui sur la périphérie de la bague extérieure 8, ou dans le cas représenté sur la périphérie de l'organe d'étanchéité 13, et la partie annulaire frontale 14a de l'élément d'attaque rapporté vient en appui par sa face interne sur la face frontale de la bague tournante 8 du roulement 1.

L'élément d'attaque 14 peut être fabriquée de façon très économique à partir d'un feuillard d'acier, par découpe, emboutissage et pliage, ledit élément d'attaque une fois formé subissant un traitement thermique de durcissement limitant son usure due au contact avec les doigts 15 du diaphragme d'embrayage.

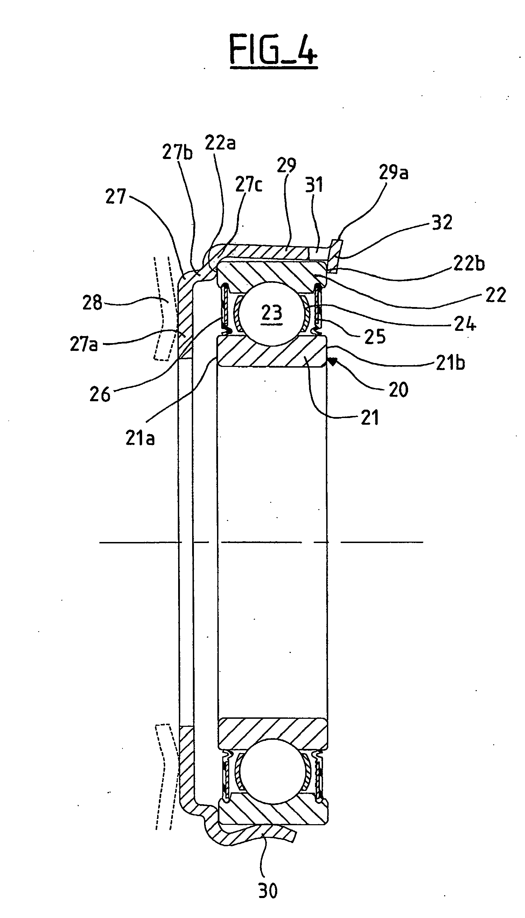

Sur la figure 4, est illustré un mode de réalisation de l'invention adapté à un roulement conventionnel standard à bagues massives. Le roulement 20 comprend une bague intérieure non tournante 21, une bague extérieure tournante 22, une rangée d'éléments roulants 23, ici des billes, disposés entre des chemins de roulement formés sur les bagues intérieure 21 et extérieure 22 et maintenus par une cage 24, et des éléments d'étanchéité 25 et 26 montés de part et d'autre des éléments roulants 23 et obturant l'espace entre les bagues intérieure 21 et extérieure 22. Les éléments d'étanchéité 25 et 26 sont identiques.

Les bagues intérieure 21 et extérieure 22 sont de type massives et comportent un chemin de roulement formant une concavité par rapport, respectivement, à la surface extérieure et la surface intérieure des bagues intérieure 21 et extérieure 22. La bague extérieure 22 comprend des surfaces frontales radiales 22a et 22b, coplanaires avec les surfaces frontales radiales 21a et 21b correspondantes de la bague intérieure 21.

On entendra par bagues massives des bagues qui ne sont pas obtenues à partir d'une tôle de métal mais à partir d'ébauches annulaires forgées, laminées ou tournées, les formes et dimensions finales étant obtenues par des procédés d'usinage avec enlèvement de copeaux.

L'élément d'attaque 27 comprend une portion radiale 27a dirigée vers l'intérieur et prévue pour être en contact avec des doigts 28 légèrement convexes, d'un diaphragme d'embrayage. L'élément d'attaque 27 comprend, en outre, une courte portion tubulaire 27b dirigée à l'opposé des doigts 28 du diaphragme à partir de l'extrémité de grand diamètre de la portion radiale 27a, et une portion radiale supplémentaire 27c relativement courte et s'étendant radialement vers l'extérieur à partir de l'extrémité de la portion tubulaire 27b opposée à la portion radiale 27a. La portion radiale supplémentaire 27c offre ainsi une surface radiale sur laquelle vient s'appuyer la face frontale 22a de la bague extérieure 22 en évitant tout contact entre le reste de l'élément d'attaque 27, notamment la portion radiale 27a, et l'élément d'étanchéité 26 ou la bague intérieure 21.

L'élément d'attaque 27 se complète à l'instar de l'élément d'attaque 14 par des languettes de retenue 29 et de centrage 30 analogues aux languettes 16 et 17 des modes de réalisation précédents. Les languettes de centrage 30 sont de forme courbe et viennent en contact avec la surface périphérique tubulaire de la bague extérieure 22. Les pattes 32 formées à l'extrémité libre 29a des languettes de retenue 29 sont en contact avec la surface frontale radiale 22b de la bague extérieure 22. A titre de variante pouvant fonctionner avec un diaphragme de grand diamètre, la portion radiale 27a pourrait être repliée pour être dirigée vers l'extérieur.

Dans ces différents modes de réalisation, l'élément d'attaque rapporté permet, de façon très économique, d'équiper une butée en tôle existante afin de pouvoir l'utiliser avec un diamètre de diaphragme pour laquelle elle n'avait pas été prévue initialement, évitant ainsi le développement et la fabrication d'un nouveau roulement sur mesure.

L'élément d'attaque rapporté permet également de transformer extrêmement rapidement un roulement conventionnel standard à bagues massives, fabriqué en série, en un roulement de butée de débrayage spécifique et adapté à un diamètre particulier de diaphragme.

L'élément d'attaque rapporté est économique à fabriquer, facile à mettre en place par un simple mouvement axial et ne modifie pas le jeu interne initial du roulement. En effet, l'élément d'attaque coopère avec la bague extérieure sans exercer de contrainte excessive sur celle-ci, contrainte qui pourra présenter un risque de déformation de la bague extérieure et donc de modification du jeu interne du roulement.

## Revendications

1. Dispositif de butée de débrayage, du type comprenant un palier à roulement (1) muni d'une bague non tournante (7) et d'une bague tournante (8), ledit dispositif étant capable d'agir sur un diaphragme de mécanisme d'embrayage, et comprenant un élément d'attaque (14) en tôle solidaire de la bague tournante et prévu pour entrer en contact avec le diaphragme, ledit dispositif comprenant des moyens de retenue de l'élément d'attaque sur la bague tournante, **caractérisé par le fait que** lesdits moyens de retenue sont monoblocs avec l'élément d'attaque.

2. Dispositif selon la revendication 1, **caractérisé par le fait que** l'élément d'attaque comprend des languettes axiales pourvues à leur extrémité de moyens de retenue axiale sur la bague tournante du roulement.

3. Dispositif selon la revendication 2, **caractérisé par le fait que** les moyens de retenue comprennent des pattes (19) pliées vers l'intérieur.

4. Dispositif selon la revendication 3, **caractérisé par le fait que** les pattes sont obtenues par découpe partielle de la languette (16).

5. Dispositif selon la revendication 3 ou 4, **caractérisé par le fait que** les pattes sont pliées.

6. Dispositif selon l'une quelconque des revendications précédentes, **caractérisé par le fait que** l'élément d'attaque comprend des languettes de centrage (17).

7. Dispositif selon l'une quelconque des revendications précédentes, **caractérisé par le fait que** la bague extérieure (8) est en tôle emboutie.

8. Dispositif selon l'une quelconque des revendications 1 à 6, **caractérisé par le fait que** la bague extérieure est massive.

9. Elément d'attaque pour butée de débrayage du type comprenant un palier à roulement muni d'une bague non tournante et d'une bague tournante, ledit élément d'attaque réalisé en tôle étant capable d'agir sur un diaphragme de mécanisme d'embrayage tout en étant solidaire de la bague tournante, **caractérisé par le fait qu**'il comprend, de façon monobloc, des moyens de retenue sur la bague tournante.

## Claims

1. Clutch release bearing device, of the type comprising a rolling bearing (1) provided with a non-rotating race (7) and a rotating race (8), said device being capable of acting on a diaphragm of a clutch mechanism, and comprising a contacting element (14) made of sheet metal integral with the rotating race and provided so as to come into contact with the diaphragm, said device comprising means for retaining the contacting element on the rotating race, **characterized in that** said retaining means are integral with the contacting element.

2. Device according to Claim 1, **characterized in that** the contacting element comprises axial tongues provided at their ends with axially retaining means on the rotating race of the rolling bearing.

3. Device according to Claim 2, **characterized in that** the retaining means comprise tabs (19) folded inwards.

4. Device according to Claim 3, **characterized in that** the tabs are obtained by partially cutting the tongue (16).

5. Device according to Claim 3 or 4, **characterized in that** the tabs are folded.

6. Device according to any one of the preceding claims, **characterized in that** the contacting element comprises centring tongues (17).

7. Device according to any one of the preceding claims, **characterized in that** the outer race (8) is made of stamped sheet metal.

8. Device according to any one of Claims 1 to 6, **characterized in that** the outer race is solid.

9. Contacting element for a clutch release bearing of the type comprising a rolling bearing provided with a non-rotating race and a rotating race, said contacting element made of sheet metal being capable of acting on a diaphragm of a clutch mechanism while being integral with the rotating race, **characterized in that** it includes, integrally, retaining means on the rotating race.

## Patentansprüche

1. Kupplungsausrückeranordnung mit einem Wälzlager (1), das einen stillstehenden Ring (7) und einen umlaufenden Ring (8) aufweist, wobei die Einrichtung dazu eingerichtet ist, mit der Membranfederanordnung einer Kupplung zusammen zu wirken und ein aus Blech hergestelltes Andruckelement umfaßt, das an dem umlaufenden Ring befestigt ist und dazu vorgesehen ist, mit der Membranfeder in Berührung zu kommen, und wobei die Anordnung Befestigungsmittel zum Befestigen des Andruckelementes an dem umlaufenden Ring aufweist, **dadurch gekennzeichnet, dass** die Befestigungsmittel mit dem Andruckelement einstückig sind.

2. Anordnung nach Anspruch 1, **dadurch gekennzeichnet, dass** das Andruckelement axial sich streckende Zungen aufweist, die an ihrem Ende mit axialen Sicherungsmitteln für den umlaufenden Ring des Wälzlagers versehen sind.

3. Anordnung nach Anspruch 2, **dadurch gekennzeichnet, dass** die Befestigungsmittel nach innen umgebogene Krallen (19) aufweisen.

4. Anordnung nach Anspruch 3, **dadurch gekennzeichnet, dass** die Krallen von partiellen Ausschnitten der Zungen (16) gebildet sind.

5. Anordnung nach Anspruch 3 oder 4, **dadurch gekennzeichnet, dass** die Krallen gebogen sind.

6. Anordnung nach einem der vorhergehenden Ansprüche **dadurch gekennzeichnet, dass** das Anlageelement Zentrierzungen (17) aufweist.

7. Anordnung nach einem der vorhergehenden Ansprüche **dadurch gekennzeichnet, dass** der Außenring (8) von einem Blechstanz- und -biegeteil gebildet ist.

8. Anordnung nach einem der Ansprüche 1 bis 6, **dadurch gekennzeichnet, dass** der Außenring massiv ist.

9. Andruckelement für einen Kupplungsausrücker mit einem Wälzlager, das einen stillstehenden und einen umlaufenden Ring aufweist, wobei das Andruckelement aus Blech hergestellt und dazu eingerichtet ist, mit der Membranfederanordnung einer Kupplung zusammen zu wirken, indem es an dem umlaufenden Ring befestigt ist, **dadurch gekennzeichnet, dass** es für den umlaufenden Ring einstückige Befestigungsmittel aufweist.
